# EUROPEAN PATENT APPLICATION

(11) **EP 2 642 730 A1**
(43) Date of publication of application: **25.09.2013**
(21) Application number: 12160314.6
(22) Date of filing: 20.03.2012
(51) Int. Cl.: H04M 1/725, H04M 1/02, H05K 5/02

(54) **Modem mobile phone**

(71) Applicant: Water World Technology Co., Ltd., Shenzhen, Guangdong 518067 (CN)
(72) Inventor: Yao, Jiangchao, HUIZHOU CITY (CN)
(74) Representative: Karakatsanis, Georgios

(57) **Abstract**

The present invention discloses a modem mobile phone which comprises a motherboard (1), a Bluetooth module (4), a power management means (5) and an SD card (6). The Bluetooth module (4), the power management means (5) and the SD card (6) are connected to the motherboard (1) respectively. The power management means connects to a speaker (7), a receiver (8) and a microphone (9). The Bluetooth module (4) is provided with a Bluetooth antenna (10). The modem mobile phone further comprises a USB port (2) and a WLAN module (3) which connect to the motherboard (1) respectively. The WLAN module (3) connects to a WLAN antenna (11). The USB port (2) is connected to the casing (19) by means of a retractable connector (20) fixed disposed inside a bottom end of the casing (19). The present invention receives messages via the WLAN module, and connects to an external computer via the USB port for data exchange, and could make phone calls and send messages any time, thereby attaining the combined functions of a mobile phone and a wireless network card.

## Description

### Technical Field

The present invention relates to a mobile phone and more particularly pertains to a modem mobile phone.

### Background Art

Existing wireless network cards such as USB wireless network cards could serve only as a connection between a wireless network and a personal computer; however, they could not be used to make or receive phone calls, nor send or receive messages. If they are not connected to a computer, they have no use.

Existing cell phones could make and receive phone calls, as well as send and receive messages; however, if they have to connect to a computer and serve as modem, they have to be connected to the computer via a data cable, instead of simply plugging into the computer like a modem.

### Disclosure of the Invention

It is an object of the present invention to provide a mobile phone which could make phone calls and send messages any time, as well as plug into a computer by means of its own USB port to serve as a USB modem without the need of a data cable.

To attain this, the technical proposal of the present invention is as follows:
A modem mobile phone, which comprises a casing and a motherboard disposed inside the casing; the motherboard is electrically connected to a Bluetooth module, a power management means and an SD card; the power management means connects to a speaker, a receiver and a microphone; the Bluetooth module is provided with a Bluetooth antenna; it is **characterized in that** the modem mobile phone comprises a USB port and a WLAN module which connect to a central processor of the motherboard respectively; the WLAN module connects to a WLAN antenna; the USB port is disposed on the casing and is movably connected to the casing.

The preset invention is further elaborated in detail as follows:

The USB port connects to the motherboard via an electric wire, and electrically connects to the central processor of the motherboard via a motherboard trace.

The USB port is provided with a protection cover.

The protection cover is engageable with the USB port.

Operation principle:
During operation, the power management means provides power to the motherboard. The motherboard comprises an antenna, a receiving coupling circuit, an RF receiving circuit, an RF transceiver, a central processor, an RF transmitting circuit, and a transmitting coupling circuit. Wireless cellular signals received by the antenna enters the RF receiving circuit via the receiving coupling circuit, and the RF receiving circuit filters the signals and transmit the filtered signals to the RF transceiver. After the RF transceiver processes the signals, the signals are decoded and processed by the central processor and then transmitted to the USB port. The signals are then transmitted to the personal computer or other USB devices via the USB port. The personal computer or other USB devices transmits digital signals to the USB port of the mobile phone, the USB port of the modem mobile phone then transmits the digital signals received to the central processor. The signals encoded and modulated by the central processor are transmitted to the RF transceiver. The RF transceiver then modulates and converts the signals to obtain transmit signals; the transmit signals are amplified by the RF transmit circuit and transmitted to the antenna via the transmitting coupling circuit, thereby attaining conversion of radio-frequency signals to wireless signals.

The wireless antenna couples the data transmitted by other Bluetooth devices to the Bluetooth module, and the processed data is then transmitted to the central processor. The data is encoded and processed by the central processor and then transmitted to the USB port of the mobile phone. The signals are then transmitted to the personal computer (or other USB devices). The personal computer (or other USB devices) transmits digital signals to the USB port of the mobile phone via USB. The USB port of the modem mobile phone transmits the digital signals received to the central processor. The data signals encoded and modulated by the central processor are transmitted to the Bluetooth device. The Bluetooth baseband then channel encodes the data from the central processor and then transmits the data downstream for transmission.

The WLAN antenna of the modem mobile phone receives the signals transmitted from the WLAN base station and couples the signals to the WLAN module. The signals are amplified, down-converted, demodulated and decoded in the module to convert to data for transmission to the central processor. The central processor decodes and processes the signals and transmits the signals to the USB port of the mobile phone, and thereafter to the personal computer (or other USB devices).

The personal computer (or other USB devices) transmits the digital signals to the USB port of the modem mobile phone via USB. The USB port of the modem mobile phone transmits the digital signals received to the central processor. The signals encoded and modulated by the central processor are transmitted to the WLAN module. The signals are encoded, modulated, up converted and amplified by the WLAN module and thereafter transmitted to the antenna for wireless radiation.

The central processor reads data from the SD card. The data processed by the central processor are transmitted to the USB port of the modem mobile phone and thereafter transmitted to a personal computer (or other USB devices). The personal computer (or other USB devices) transmits the digital signals to the USB port of the modem mobile phone via USB. The USB port of the modem mobile phone transmits the digital signals received to the central processor. The signals processed by the central processor are written to the SD card.

Once the present invention is detached from the personal computer, it could be used to make phone calls and send messages, thereby attaining all functions of a mobile phone.

In comparison with conventional mobile phone products, the present invention has the following beneficial effects:
(1) The present invention receives messages via the WLAN module, and connects to an external computer via the USB port for data exchange without the need of a data cable, and could make phone calls and send messages any time, thereby attaining the combined functions of a mobile phone and a wireless network card.
(2) The present invention may be served as a mobile flash memory.
(3) The USB port of the present invention is movably connected to the casing, so it is very convenient to use.

### Brief Description of Drawings

FIG. 1 is circuit diagram of the present invention.
FIG. 2 illustrates the structure of the present invention.
FIG. 3 illustrates the structure of the USB port of the preset invention.

In the figures, 1 indicates the motherboard; 2 indicates the USB port; 3 indicates the WLAN module (i.e. wireless LAN module); 4 indicates the Bluetooth module; 5 indicates the power management means; 6 indicates the SD card (or commonly known Secure Digital Memory Card); 7 indicates the speaker; 8 indicates the receiver; 9 indicates the microphone (or commonly known as mic); 10 indicates the Bluetooth antenna; 11 indicates the WLAN antenna (i.e. wireless LAN antenna); 12 indicates the antenna; 13 indicates the receiving coupling circuit; 14 indicates the RF receiving circuit; 15 indicates the RF transmitter; 16 indicates the central processor; 17 indicates the RF transmitting circuit; 18 indicates the transmitting coupling circuit; 19 indicates the casing; 20 indicates the retractable connector.

Besides, the "RF" mentioned above refers to general register file. Best Mode for Carrying out the Invention

The present invention is further described with the accompanying drawings and embodiments.

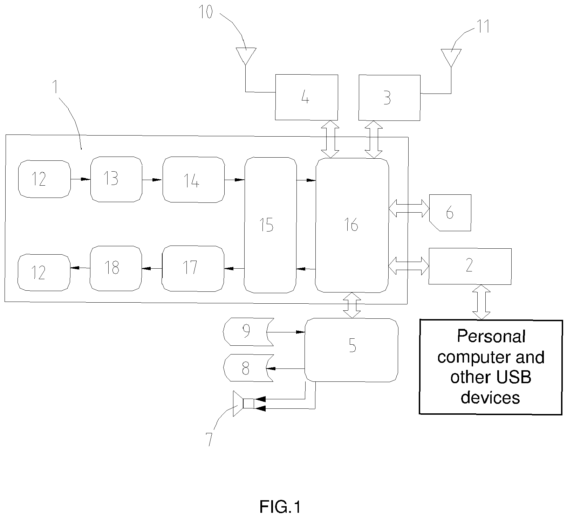

As illustrated in Fig. 1, the modem mobile phone of the present invention comprises a motherboard 1, a Bluetooth module 4, a power management means 5 and an SD card 6. The Bluetooth module 4, the power management means 5 and the SD card 6 are connected to the motherboard 1 respectively. The power management means connects to a speaker 7, a receiver 8 and a microphone 9. The Bluetooth module 4 is provided with a Bluetooth antenna 10. The modem mobile phone further comprises a USB port 2 and a WLAN module 3 which connect to the motherboard 1 respectively. The WLAN module 3 connects to a WLAN antenna 11.

The motherboard 1 comprises an antenna 12, a receiving coupling circuit 13, an RF receiving circuit 14, an RF transceiver 15, a central processor 16, an RF transmitting circuit 17, and a transmitting coupling circuit 18.

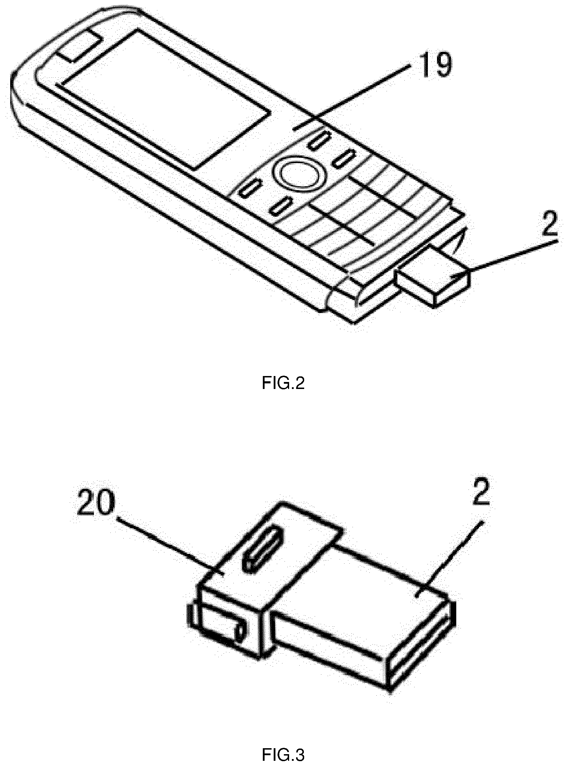

As illustrated in Figs. 2 and 3, the USB port 2 is disposed on a bottom end of the casing 19 and is movably connected to the casing 19. The USB port 2 is connected to the casing 19 by means of a retractable connector 20 fixedly disposed inside the bottom end of the casing 19.

The USB port 2 connects to the motherboard 1 via an electric wire, and electrically connects to the central processor 16 of the motherboard 1 via a motherboard trace.

The USB port 2 is provided with a protection cover.

The protection cover is engageable with the USB port 2.

During operation, the power management means 5 provides power to the motherboard 1. Wireless cellular signals received by the antenna 12 enters the RF receiving circuit 14 via the receiving coupling circuit 13, and the RF receiving circuit 14 filters the signals and transmit the filtered signals to the RF transceiver 15. After the RF transceiver 15 processes the signals, the signals are decoded and processed by the central processor 16 and then transmitted to the USB port. The signals are then transmitted to the personal computer or other USB devices via the USB port 2. The personal computer or other USB devices transmits digital signals to the USB port of the mobile phone, the USB port of the modem mobile phone then transmits the digital signals received to the central processor 16. The signals encoded and modulated by the central processor 16 are transmitted to the RF transceiver 15. The RF transceiver 15 then modulates and converts the signals to obtain transmit signals; the transmit signals are amplified by the RF transmit circuit 17 and transmitted to the antenna 12 via the transmitting coupling circuit 18, thereby attaining conversion of radio-frequency signals to wireless signals.

The wireless antenna 10 couples the data transmitted by other Bluetooth devices to the Bluetooth module 4, and the processed data is then transmitted to the central processor 16. The data is encoded and processed by the central processor 16 and then transmitted to the USB port of the mobile phone. The signals are then transmitted to the personal computer (or other USB devices). The personal computer (or other USB devices) transmits digital signals to the USB port of the mobile phone via USB. The USB port of the modem mobile phone transmits the digital signals received to the central processor 16. The data signals encoded and modulated by the central processor 16 are transmitted to the Bluetooth device. The Bluetooth baseband then channel encodes the data from the central processor 16 and then transmits the data downstream for transmission.

The WLAN antenna 11 of the modem mobile phone receives the signals transmitted from the WLAN base station and couples the signals to the WLAN module. The signals are amplified, down-converted, demodulated and decoded in the module to convert to data for transmission to the central processor. The central processor decodes and processes the signals and transmits the signals to the USB port of the mobile phone, and thereafter to the personal computer (or other USB devices).

The personal computer (or other USB devices) transmits the digital signals to the USB port 2 of the modem mobile phone via USB. The USB port 2 of the modem mobile phone transmits the digital signals received to the central processor 16. The signals encoded and modulated by the central processor 16 are transmitted to the WLAN module 3. The signals are encoded, modulated, up converted and amplified by the WLAN module 3 and thereafter transmitted to the antenna 13 for wireless radiation.

The central processor 16 reads data from the SD card 6. The data processed by the central processor 16 are transmitted to the USB port of the modem mobile phone and thereafter transmitted to a personal computer (or other USB devices). The personal computer (or other USB devices) transmits the digital signals to the USB port 2 of the modem mobile phone via USB. The USB port 2 of the modem mobile phone transmits the digital signals received to the central processor 16. The signals processed by the central processor 16 are written to the SD card 6.

According to the above disclosure, a person skilled in the art may make suitable modifications and changes to the above embodiments. Therefore, the present invention is not limited by the above disclosure and the embodiment described. Modifications and changes to the present invention should fall within the scope of the present invention as defined by the claims. Besides, although certain technical terms have been used throughout the specification, the technical terms are intended for ease of explanation and are not intended to restrict the present invention in any ways.

## Claims

1. A modem mobile phone, which comprises a casing (19) and a motherboard (1) disposed inside the casing (19); the motherboard (1) is electrically connected to a Bluetooth module (4), a power management means (5) and an SD card (6); the power management means (5) connects to a speaker (7), a receiver (8) and a microphone (9); the Bluetooth module (4) is provided with a Bluetooth antenna (10); it is **characterized in that** the modem mobile phone comprises a USB port (2) and a WLAN module (3) which connect to a central processor (16) of the motherboard (1) respectively; the WLAN module (3) connects to a WLAN antenna (11); the USB port (2) is disposed on the casing (19) and is movably connected to the casing (19).

2. The modem mobile phone as in Claim 1, **characterized in that** the USB port (2) is movably connected to the casing (19) via a retractable connector (20) fixedly disposed inside a bottom end of the casing (19).

3. The modem mobile phone as in Claim 1, **characterized in that** the USB port (2) connects to the motherboard (1) via an electric wire, and electrically connects to the central processor (16) of the motherboard (1) via a motherboard trace of the motherboard (1).

4. The modem mobile phone as in Claim 2, **characterized in that** the USB port (2) is provided with a protection cover.

5. The modem mobile phone as in Claim 4, **characterized in that** the protection cover is engageable with the USB port (2).
